# EUROPEAN PATENT APPLICATION

(11) **EP 2 677 579 A1**
(43) Date of publication of application: **25.12.2013**
(21) Application number: 12747136.5
(22) Date of filing: 17.02.2012
(51) Int. Cl.: H01M 8/02, H01M 4/86, H01M 4/88, H01M 8/10

(54) **MEMBRANE-ELECTRODE ASSEMBLY FOR FUEL CELL, MANUFACTURING METHOD THEREOF, AND SOLID POLYMER FUEL CELL USING MEMBRANE-ELECTRODE ASSEMBLY**

(30) Priority: 18.02.2011 JP 2011032755; 22.03.2011 JP 2011061988
(71) Applicant: Dai Nippon Printing Co., Ltd., Tokyo 162-8001 (JP)
(72) Inventor: TAKEUCHI, Naoya, Tokyo 162-8001 (JP); KISHIMOTO, Hiroshi, Tokyo 162-8001 (JP)
(74) Representative: Vossius & Partner
(86) International application number: PCT/JP2012/053870
(87) International publication number: WO 2012/111823

(57) **Abstract**

By stacking a gas diffusion layer, which comprises a first conductive layer comprising a specific conductive carbon material and a specific polymer, on a catalyst layer in such a manner that the first conductive layer is in contact with the catalyst layer and the polymer in the first conductive layer is present with a higher density at the surface of the layer in contact with the catalyst layer than at the surface not in contact with the catalyst layer, a membrane-electrode assembly having a strong adhesion between the catalyst layer and the gas diffusion layer can be provided. Further, a fuel cell membrane-electrode assembly that reduces the position gap between a catalyst layer and a conductive porous layer, and between a conductive porous layer and a conductive porous substrate can be provided by using a gas diffusion layer that further comprises a second conductive layer formed on the first conductive layer and that comprises a specific conductive carbon material and a specific polymer, and stacking the gas diffusion layer on the catalyst layer in such a manner that the polymer in the first conductive layer is present with a higher density at the surface of the layer in contact with the catalyst layer than at the surface in contact with the second conductive layer and the polymer in the second conductive layer is present with a higher density at the surface of the layer in contact with the first conductive layer than at the surface not in contact with the first conductive layer.

## Description

### Technical Field

The present invention relates to a fuel cell membrane-electrode assembly and a production method thereof, and a polymer electrolyte fuel cell comprising the membrane-electrode assembly.

### Background Art

The membrane-electrode assembly (MEA) used as a component of a solid polymer full cell has a structure wherein a gas diffusion layer, a catalyst layer, an ion-conductive solid polymer electrolyte membrane, a catalyst layer, and a gas diffusion layer are sequentially laminated.

In the polymer electrolyte fuel cell, a reaction occurs at the three-phase interface where fuel gas, electrolyte, and catalyst particles are in contact with each other, within the catalyst layer. For high power generation performance, it is important to efficiently discharge water, which is generated by the electrode reaction on the three-phase interface, out of the electrode system to enable full supply of fuel gas; it is also important to uniformly diffuse the supplied fuel gas over the surface of the electrode catalyst layer. For these purposes, it is necessary to dispose the gas diffusion layer in the vicinity of the catalyst layer to efficiently supply fuel gas to the catalytic surface, and enhance the drainability of the electrode.

This gas diffusion layer is generally formed by using a conductive porous substrate, such as carbon paper or carbon cloth. To enhance the conductivity of such a conductive porous substrate, as well as enhance gas diffusivity, water drainability , etc., a conductive porous layer comprising conductive carbon particles, a water-repellent resin, etc., may be further formed on such a conductive porous substrate.

However, in conventional membrane-electrode assemblies, because mostly a fluororesin having a high glass transition temperature is used as a resin forming the gas diffusion layer, as disclosed in Patent Literature (PTL) 1 and 2, the adhesion between the conductive porous layer and the catalyst layer is poor, which causes unstable cell performance. Furthermore, to increase the adhesion, bonding at a high temperature of 260°C or more is necessary. However, when such a high-temperature step is performed, degradation of the ion-conductive polymer electrolyte contained in the catalyst layer and the resin that forms an electrolyte membrane occurs, which adversely deteriorates cell performance. Therefore, bonding under such high-temperature conditions has been impractical.

### Citation List

### Patent Literature

PTL 1: JP2006-278037A
PTL 2: JP2006-339018A

### Summary of Invention

### Technical Problem

An object of the present invention is to provide a membrane-electrode assembly having a strong adhesion between the catalyst layer and the gas diffusion layer. Another object of the present invention is to provide a fuel cell membrane-electrode assembly that reduces the position gap between the catalyst layer and the conductive porous layer, and between the conductive porous layer and the conductive porous substrate. Solution to Problem

In view of the above objects, the prevent inventors carried out extensive research to impart the desired properties to a membrane-electrode assembly. As a result, the inventors found that a bonded membrane-electrode assembly can be provided by forming a gas diffusion layer using a first conductive layer comprising a specific component. Specifically, a membrane-electrode assembly comprising the gas diffusion layer bonded to the catalyst layer laminated membrane can be provided by stacking a gas diffusion layer on a catalyst layer laminated membrane in such a manner that the first conductive layer is in contact with the catalyst layer, and a polymer (a polymer having a glass transition temperature that satisfies at least one of the following conditions: the temperature is not higher than the glass transition temperature of the electrolyte contained in the catalyst layer, and the temperature is not higher than the glass transition temperature of the electrolyte membrane-forming resin) in the first conductive layer is present with a higher density at the surface of the layer in contact with the catalyst layer than at the surface not in contact with the catalyst layer.

The present inventors further found that a membrane-electrode assembly that reduces the position gap can be provided by using a gas diffusion layer having first and second conductive layers comprising specific components. More specifically, when a gas diffusion layer is stacked on a catalyst layer laminated membrane in such a manner that a polymer (a polymer having a glass transition temperature that satisfies at least one of the following conditions: the temperature is not higher than the glass transition temperature of the ion-conductive polymer electrolyte contained in the catalyst layer, and the temperature is not higher than the glass transition temperature of the electrolyte membrane-forming ion-conductive resin) in the first conductive layer is present with a higher density at the surface in contact with the catalyst layer than at the surface in contact with the second conductive layer, and when a polymer (a polymer having a glass transition temperature that satisfies at least one of the following conditions: the temperature is not higher than the glass transition temperature of the electrolyte contained in the catalyst layer, and the temperature is not higher than the glass transition temperature of the electrolyte membrane-forming ion-conductive resin) in the second conductive layer is present with a higher density at the surface of the layer in contact with the first conductive layer than at the surface not in contact with the first conductive layer, bonding by pressing at a low temperature that is low enough not to deteriorate the ion-conductive polymer electrolyte in the catalyst layer or the electrolyte membrane-forming resin can be achieved, and a membrane-electrode assembly that reduces the position gap between each of the members can be provided. The present invention has been accomplished based on this finding.

That is, the present invention provides the following fuel cell membrane-electrode assembly and polymer electrolyte fuel cell comprising the assembly.
Item 1. A fuel cell membrane-electrode assembly comprising a catalyst layer laminated membrane and at least one fuel cell gas diffusion layer,
   the catalyst layer laminated membrane comprising a catalyst layer, an electrolyte membrane, and a catalyst layer that are sequentially laminated,
   the fuel cell gas diffusion layer being disposed on one side or both sides of the catalyst layer laminated membrane,
   the fuel cell gas diffusion layer comprising a first conductive layer and being stacked on the catalyst layer laminated membrane in such a manner that the first conductive layer is in contact with the catalyst layer,
   the first conductive layer comprising at least a conductive carbon material and a polymer, the polymer having a glass transition temperature that satisfies at least one of the following conditions: the temperature is not higher than the glass transition temperature of an ion-conductive polymer electrolyte that is contained in the catalyst layer, and the temperature is not higher than the glass transition temperature of an electrolyte membrane-forming ion-conductive resin, and
   the polymer in the first conductive layer being present with a higher density at the surface of the layer in contact with the catalyst layer than at the surface not in contact with the catalyst layer.
Item 2. The fuel cell membrane-electrode assembly according to Item 1, wherein the glass transition temperature of the polymer in the first conductive layer is not higher than the glass transition temperature of the ion-conductive polymer electrolyte contained in the catalyst layer and is not higher than the glass transition temperature of the electrolyte membrane-forming ion-conductive resin.
Item 3. The fuel cell membrane-electrode assembly according to Item 1 or 2, wherein the conductive carbon material in the first conductive layer comprises conductive carbon particles.
Item 4. The fuel cell membrane-electrode assembly according to any one of Items 1 to 3, wherein the fuel cell gas diffusion layer further comprises a second conductive layer formed on the first conductive layer,
   the second conductive layer comprising at least a conductive carbon material and a polymer the polymer having a glass transition temperature that satisfies at least one of the following conditions: the temperature is not higher than the glass transition temperature of the ion-conductive electrolyte contained in the catalyst layer, and the temperature is not higher than the glass transition temperature of the electrolyte membrane-forming ion-conductive resin,
   the polymer in the first conductive layer being present with a higher density at the surface of the layer in contact with the catalyst layer than at the surface not in contact with the catalyst layer, and
   the polymer in the second conductive layer being present with a higher density at the surface of the layer in contact with the first conductive layer than at the surface not in contact with the first conductive layer.
Item 5. The fuel cell membrane-electrode assembly according to Item 4, wherein the glass transition temperature of the polymer in the second conductive layer is not higher than the glass transition temperature of the ion-conductive electrolyte contained in the catalyst layer, and is not higher than the glass transition temperature of the electrolyte membrane-forming ion-conductive resin.
Item 6. The fuel cell membrane-electrode assembly according to Item 4 or 5, wherein the conductive carbon material in the second conductive layer comprises conductive carbon fibers.
Item 7. The fuel cell membrane-electrode assembly according to any one of Items 1 to 6, further comprising a conductive porous substrate stacked on the first or second conductive layer, the conductive porous substrate comprising carbon paper, carbon cloth, or carbon nonwoven fabric.
Item 8. The fuel cell membrane-electrode assembly according to Item 7, wherein the conductive porous substrate has water repellency imparted by a fluororesin.
Item 9. A method for producing the fuel cell membrane-electrode assembly according to any one of Items 1 to 8, the method comprising the steps of:
   (AI) applying a first conductive layer-forming paste composition to a substrate and drying, wherein the composition comprises at least a conductive carbon material and a polymer, the polymer having a glass transition temperature that satisfies at least one of the following conditions: the temperature is not higher than the glass transition temperature of the ion-conductive electrolyte contained in the catalyst layer, and the temperature is not higher than the glass transition temperature of the electrolyte membrane-forming ion-conductive resin, and
      then detaching the first conductive layer from the substrate to produce a first conductive layer having a polymer with a higher density at one side surface than at the opposite side surface; and
   (AII) disposing the first conductive layer on one side or both sides of the catalyst layer laminated membrane in such a manner that the catalyst layer and the surface of the first conductive layer having the polymer with a higher density are face-to-face, and performing hot-pressing for bonding.
Item 10. A method for producing the fuel cell membrane-electrode assembly according to any one of Items 4 to 6, the method comprising the steps of:
   (BI) applying a first conductive layer-forming paste composition to a substrate and drying, wherein the composition comprises at least a conductive carbon material and a polymer, the polymer having a glass transition temperature that satisfies at least one of the following conditions: the temperature is not higher than the glass transition temperature of the ion-conductive electrolyte contained in the catalyst layer, and the temperature is not higher than the glass transition temperature of the electrolyte membrane-forming ion-conductive resin, and then detaching the first conductive layer from the substrate to produce a first conductive layer having a polymer with a higher density at one side surface than at the opposite side surface, and
   (BII) applying a second conductive layer-forming paste composition to a substrate and drying, wherein the composition comprises at least a conductive carbon material and a polymer, the polymer having a glass transition temperature that satisfies at least one of the following conditions: the temperature is not higher than the glass transition temperature of the ion-conductive electrolyte contained in the catalyst layer, and the temperature is not higher than the glass transition temperature of the electrolyte membrane-forming ion-conductive resin, and then detaching the second conductive layer from the substrate to produce a second conductive layer having a polymer with a higher density at one side surface than at the opposite side surface, and
   (BIII) disposing the first and second conductive layers on one side or both sides of the catalyst layer laminated membrane in such a manner that the catalyst layer and the surface of the first conductive layer having the polymer with a higher density are face-to-face, and the surface of the second conductive layer having the polymer with a higher density and the surface of the first conductive layer having the polymer with a lower density are face-to-face, and performing hot-pressing for bonding. Item 11. The method according to Item 10 wherein in step (BIII), the first conductive layer and the catalyst layer laminated membrane are hot-pressed before disposing the second conductive layer on the first conductive layer.
Item 12. The method according to any one of Items 9 to 11 wherein in step (AII) or (BIII), the hot-pressing temperature satisfies at least one of the following conditions: the temperature is not higher than the glass transition temperature of the ion-conductive polymer electrolyte contained in the catalyst layer, and the temperature is not higher than the glass transition temperature of the electrolyte membrane-forming ion-conductive resin.
Item 13. The method according to any one of Items 9 to 12 wherein in step (AII) or (BIII), the hot-pressing temperature is not higher than the glass transition temperature of the ion-conductive polymer electrolyte contained in the catalyst layer, and is not higher than the glass transition temperature of the electrolyte membrane-forming ion-conductive resin. Item 14. A polymer electrolyte fuel cell comprising the fuel cell membrane-electrode assembly according to any one of Items 1 to 8.

### 1. Fuel cell membrane-electrode assembly

The membrane-electrode assembly of the present invention comprises a gas diffusion layer stacked on one or both sides of a catalyst layer laminated membrane. The catalyst layer laminated membrane comprises a catalyst layer, an electrolyte membrane, and a catalyst layer that are sequentially laminated.

### (1) Fuel cell gas diffusion layer

The fuel cell gas diffusion layer used in the present invention has a first conductive layer. The first conductive layer comprises at least a conductive carbon material and a polymer.

Preferably, the fuel cell gas diffusion layer used in the present invention further comprises a second conductive layer formed on the first conductive layer. Specifically, the fuel cell gas diffusion layer used in the present invention preferably comprises a laminate comprising first and second conductive layers. The second conductive layer comprises at least a conductive carbon material and a polymer.

### First conductive layer

The first conductive layer comprises at least a conductive carbon material (e.g., conductive carbon particles, conductive carbon fibers, etc.) and a polymer. The thickness of the first conductive layer is not particularly limited. The preferable thickness thereof is typically about 1 to 150 µm, and particularly preferably about 5 to 100 µm. In the present invention, a gas diffusion layer with excellent gas diffusivity, gas permeability, water management properties, etc., can be provided by forming the first conductive layer.

### Conductive carbon material

Examples of conductive carbon materials include, but are not limited to, conductive carbon particles, conductive carbon fibers, and the like. The first conductive layer preferably comprises at least conductive carbon particles.

### Conductive carbon particles

Any carbon material that is conductive may be used as conductive carbon particles, and known or commercially available materials can be used. Examples of such carbon materials include carbon blacks such as channel black, furnace black, ketjen black, acetylene black, and lamp black; graphite; active charcoal; and the like. Such carbon materials can be used singly, or in a combination of two or more. The incorporation of such conductive carbon particles can enhance the conductivity of the gas diffusion layer.

When a carbon black is used as conductive carbon particles, the average particle diameter (arithmetic average particle diameter) of the carbon black is not limited. The preferable average particle diameter thereof is typically about 5 to 200 nm, and particularly preferably about 5 to 100 nm. When a carbon black aggregate is used, the preferable average particle diameter thereof is about 10 to 600 nm, and particularly preferably about 50 to 500 nm. When graphite, active charcoal, or the like is used, the preferable average particle diameter thereof is about 500 nm to about 40 µm, and particularly preferably about 1 to 35 µm. The average particle diameter of the conductive carbon particles can be measured, for example, by an LA-920 particle size distribution analyzer, produced by Horiba, Ltd.

### Conductive carbon fiber

Incorporation of conductive carbon fibers can improve the quality of the surface coated with the first conductive layer-forming paste composition, and can also provide a sheet-like first conductive layer with high strength. Examples of conductive carbon fibers that can be used in the first conductive layer include, but are not limited to, vapor-grown carbon fibers (VGCF (registered trademark)), carbon nanotubes, carbon nanowalls, carbon nanocaps, and the like. Such conductive carbon fibers may be used singly, or in a combination of two or more.

The fiber diameter of the conductive carbon fibers is not particularly limited. The preferable average fiber diameter thereof is about 50 to 450 nm, and particularly preferably about 100 to 250 nm. The use of such conductive carbon fibers can increase the nanometric fine pore volume, and is expected to provide effects such as flooding tolerance due to enhanced drainability and gas diffusion performance. The fiber length of the conductive carbon fibers is also not limited. The preferable average fiber length thereof is about 4 to 500 µm, particularly about 4 to 300 µm, more preferably about 4 to 50 µm, and particularly preferably about 10 to 20 µm. The preferable average aspect ratio thereof is about 5 to 600, and particularly preferably about 10 to 500. The fiber diameter, fiber length, and aspect ratio of the conductive carbon fibers can be measured from images measured under a scanning electron microscope (SEM), etc.

### Polymer

The polymer is not particularly limited insofar it is a resin having a glass transition temperature (Tg) that is not higher than the glass transition temperature of the ion-conductive polymer electrolyte contained in the catalyst layer, and that is not higher than the glass transition temperature (Tg) of the electrolyte membrane-forming ion-conductive resin (the term "resin" as used herein includes elastomers, etc.). Known or commercially available materials can be used. The polymer preferably has a glass transition temperature of about -100 to 300°C, more preferably -60 to 250°C, even more preferably about-30 to 220°C, and particularly preferably about -20 to 210°C. For example, the polymer may be the same material as the electrolyte membrane-forming ion-conductive resin described below, or may be the same material as the resin component of the ion-conductive polymer electrolyte, etc., contained in the catalyst layer. Specific examples thereof include ion-conductive polymer resins (e.g., Nafion), vinyl acetate resins, styrene-acrylic copolymer resins, styrene-vinyl acetate copolymer resins, ethylene-vinyl acetate copolymer resins, polyester-acrylic copolymer resins, urethane resins, acrylic resins, phenolic resins, polyvinylidene fluoride (PVDF), and the like. Other examples thereof include hexafluoropropylene-vinylidene fluoride copolymers; trifluorochloroethylene-vinylidene fluoride copolymers, and like fluororubbers; silicone rubbers; and the like. Such polymers may be used singly, or in a combination of two or more.

The use of an elastomer such as fluororubber as a polymer can increase the flexibility of the first conductive layer, and also increase its adhesion to other layers due to a low Tg of the elastomer. Further, elasticity and strength can also be improved. In this specification, the term "fluororubber" refers to a material having a Tg of about -30 to 100°C. Thus, with use of such a material, a membrane-electrode assembly comprising a gas diffusion layer having the first conductive layer can be easily produced.

As the elastomer, an elastomer emulsion (a suspension in which elastomer particles are dispersed) may be used, or an elastomer dissolved in a solvent may be used. In the case of using an elastomer emulsion, an emulsion prepared by dispersing an elastomer in a solvent, or a commercially available product can be used. Examples of the solvent include water, ethanol, propanol, and the like. When an elastomer dissolved in a solvent is used, examples of the solvent include *N*-methylpyrrolidone (NMP), methyl ethyl ketone (MEK), toluene, vinyl acetate, dimethylacetamide (DMA), isopropyl alcohol (IPA), and the like.

To impart water repellency to the first conductive layer, a water-repellent resin, such as a fluororesin, may be used as long as the effect of the present invention is not impaired. In particular, when a polymer with poor water repellency is used as the polymer, the use of a water-repellent resin is effective for increasing water repellency. Examples of such fluororesins include polytetrafluoroethylene resin (PTFE), fluorinated ethylene propylene resin (FEP), perfluoroalkoxy resin (PFA), and the like.

In the present invention, the first conductive layer-forming paste composition may comprise a dispersant, alcohol, etc., in addition to the above conductive carbon material and polymer, as long as the effect of the present invention is not impaired. The paste composition may further comprise a polymer having a high Tg, as long as the effect of the present invention is not impaired.

### Dispersant

The dispersant may be any dispersant that can disperse a conductive carbon material, a polymer, etc., in water. Known or commercially available dispersants can be used. Examples of such dispersants include nonionic dispersants such as polyoxyethylene distyrenated phenyl ether, polyoxyethylene alkylene alkyl ether, and polyethylene glycol alkyl ether; cationic dispersants such as alkyltrimethylammonium salts, dialkyl dimethyl ammonium chlorides, and alkylpyridinium chlorides; and anionic dispersants such as polyoxyethylene fatty acid esters and acidic group-containing structure-modified polyacrylate. Such dispersants may be used alone, or in a combination of two or more.

### Alcohol

The alcohol is not particularly limited, and known or commercially available alcohols can be used. Examples of such alcohols include monohydric or polyhydric alcohols having about 1 to 5 carbon atoms. Specific examples thereof include methanol, ethanol, 1-propanol, isopropanol, 1-butanol, 1-pentanol, and the like.

### Second conductive layer

The second conductive layer comprises at least a conductive carbon material (e.g., conductive carbon particles, conductive carbon fibers, etc.), and a polymer. The thickness of the second conductive layer is not particularly limited. The preferable thickness thereof is typically about 30 to 300 µm, and particularly preferably about 50 to 250 µm. In the present invention, a gas diffusion layer with excellent film strength and gas diffusivity can be provided by forming the second conductive layer.

### Conductive carbon material

Examples of conductive carbon materials include, but are not limited to, conductive carbon particles, conductive carbon fibers, and the like. The first conductive layer preferably comprises at least a conductive carbon fiber.

### Conductive carbon particles

The conductive carbon particles may be the same material as used in the first conductive layer. Specifically, any carbon material that is conductive can be used as the conductive carbon particles in the second conductive layer. Known or commercially available materials can be used. Examples of such materials include carbon blacks such as channel black, furnace black, ketjen black, acetylene black, and lamp black; graphite; active charcoal; and the like. Such materials can be used singly, or in a combination of two or more. The conductivity of the gas diffusion layer can be enhanced by incorporating such conductive carbon particles.

When a carbon black is used as conductive carbon particles, the average particle diameter (arithmetic average particle diameter) of the carbon black is not particularly limited. The preferable average particle diameter thereof is typically about 5 to 200 nm, and particularly preferably about 5 to 100 nm. When a carbon black aggregate is used, the preferable average particle diameter thereof is about 10 to 600 nm, and particularly preferably about 50 to 500 nm. When graphite, active charcoal, or the like is used, the preferable average particle diameter thereof is about 500 nm to about 40 µm, and particularly preferably about 1 to 35 µm. The average particle diameter of the conductive carbon particles can be measured, for example, by an LA-920 particle size distribution analyzer, produced by Horiba, Ltd.

### Conductive carbon fiber

Incorporation of conductive carbon fibers enables the production of a sheet-like second conductive layer with high strength. The conductive carbon fibers incorporated in the second conductive layer are not particularly limited, and examples thereof include PAN (polyacrylonitrile)-based carbon fibers, pitch-based carbon fibers, and the like. Such conductive carbon fibers can be used singly, or in a combination of two or more.

The fiber diameter of the conductive carbon fibers is not particularly limited. The preferable average fiber diameter thereof is about 450 nm to about 20 µm, and particularly preferably about 1 to 15 µm. The use of such conductive carbon fibers can produce a high-strength film; and furthermore, the formation of fine pores having a micrometric diameter can provide high gas permeability. The fiber length of the conductive carbon fibers is not particularly limited. The preferable average fiber length thereof is 1 µm to 1 mm, and particularly preferably about 3 to 600 µm. The preferable average aspect ratio thereof is about 2 to 50, and particularly preferably about 3 to 40. The fiber diameter, fiber length, and aspect ratio of the conductive carbon fibers can be measured from images measured under a scanning electron microscope (SEM), etc.

### Polymer

The polymer may be the same material as used in the first conductive layer. More specifically, the polymer for use in the second conductive layer is not particularly limited, so long as it is a resin (including elastomers, etc.) having a glass transition temperature (Tg) that satisfies at least one of the following conditions: the temperature is not higher than the glass transition temperature of the ion-conductive polymer electrolyte contained in the catalyst layer, and the temperature is not higher than the glass transition temperature of the electrolyte membrane-forming ion-conductive resin. Known or commercially available materials can be used. Specifically, the polymer preferably has a glass transition temperature of about - 100 to 300°C, more preferably about -60 to 250°C, even more preferably about -30 to 220°C, and particularly preferably about - 20 to 210°C. For example, the polymer resin may be the same material as the electrolyte membrane-forming ion-conductive resin described below, or may be the same material as the resin component of the ion-conductive polymer electrolyte, etc. contained in the catalyst layer. Specific examples thereof include ion-conductive polymer resins (e.g., Nafion), vinyl acetate resins, styrene-acrylic copolymer resins, styrene-vinyl acetate copolymer resins, ethylene-vinyl acetate copolymer resins, polyester-acrylic copolymer resins, urethane resins, acrylic resins, polyvinylidene fluoride (PVDF), and the like. Other examples thereof include fluororubbers such as hexafluoropropylene-vinylidene fluoride copolymers and trifluorochloroethylene-vinylidene fluoride copolymers, silicone rubbers, and the like. Such polymers may be used singly, or in a combination of two or more.

In the present invention, the second conductive layer-forming paste composition may comprise a fluororesin, a dispersant, alcohol, etc., in addition to the above conductive carbon material and polymer, as long as the effect of the present invention is not impaired. Usable fluororesins, dispersants, and alcohols may be the same materials as used in the first conductive layer.

### Characteristics of the first conductive layer and the second conductive layer

In the present invention, the front and back sides of each of the first and second conductive layers have different densities of the polymer component. That is, the first conductive layer or the second conductive layer has a polymer with a higher density at one side surface than at the opposite side surface. In the present invention, when the first or second conductive layer comprises two or more types of polymers, at least one type of polymer is preferably present with a higher density at one side surface of the layer than at the opposite side surface. The distribution state of the polymer component in the first and second conductive layers can be confirmed, for example, by analyzing both surfaces using energy-dispersive X-ray fluorescence spectrometry, etc. The distribution of the polymer component can also be analyzed by energy-dispersive X-ray fluorescence analysis in the layer's cross-sectional direction. When the element specific to the polymer cannot be detected by energy-dispersive X-ray fluorescence analysis, for example, in the case of using a styrene-acrylic acid rubber, the functional group resulting from the polymer can be observed by a Fourier transform infrared spectrophotometer, etc.

In the present invention, the pore diameter distribution of the first conductive layer is preferably such that the volume of pores having a diameter of 10 nm to 5 µm, and preferably 100 nm to 5 µm accounts for at least 50% of the total pore volume. The pore diameter distribution can be measured, for example, by an AutoPore IV 9500 automatic porosimeter (produced by Shimadzu Corporation). The above-mentioned pore diameter distribution can be achieved by using, for example, conductive carbon fibers with an average fiber diameter of about 50 to 400 nm, a polymer, conductive carbon particles with an average particle diameter (arithmetic average particle diameter) of 5 to 200 nm, and conductive carbon particles (e.g., graphite, active charcoal, etc.) with an average particle diameter of 500 nm to 40 µm.

The pore diameter distribution of the second conductive layer is preferably such that the volume of pores having a diameter of 5 to 100 µm, and preferably 5 to 50 µm accounts for at least 50% of the total pore volume. The above pore diameter distribution can be achieved, for example, by using conductive carbon fibers with an average fiber diameter of about 450 nm to about 20 µm, using a polymer, etc.

### Method for producing the first conductive layer and the second conductive layer

In the present invention, the first conductive layer can be obtained, for example, by applying the first conductive layer-forming paste composition to a substrate, and drying the composition; and then detaching the substrate. The second conductive layer can also be obtained by applying the second conductive layer-forming paste composition to a substrate, and drying the composition; and then detaching the substrate.

### Method for producing the first conductive layer and the second conductive layer

The first conductive layer of the present invention can be obtained, for example, by applying the first conductive layer-forming paste composition to a substrate, and drying the composition; and then detaching the substrate. The second conductive layer can also be obtained by applying the second conductive layer-forming paste composition to a substrate, and drying the composition; and then detaching the substrate.

When the first and second conductive layers are formed by the above method, the proportion of the polymer component that is present at the surfaces of the first and second conductive layers can be adjusted by utilizing the phenomenon, occurring during the drying of the paste composition, in which the polymer component contained in the first conductive layer-forming paste composition or in the paste compositions for forming a second conductive layer segregates from the side not in contact with the substrate toward the side in contact with the substrate. Accordingly, the density of the polymer component at one side surface of the layer can be increased by adjusting the amount of polymer used, viscosity of the paste composition, particle diameter in the case of using an elastomer emulsion as a polymer, drying time, specific gravity of the carbon material (e.g., conductive carbon particles, conductive carbon fibers, etc.), functional group present at the surface of the carbon material (e.g., conductive carbon particles, conductive carbon fibers, etc.), and the like. In particular, as the viscosity of the paste composition lowers and the drying time lengthens, the resin tends to segregate (see Table 1).

### Content

The first conductive layer-forming paste composition may comprise, for example, about 30 to 200 parts by weight (particularly 40 to 150 parts by weight) of a polymer, about 0 to 100 parts by weight (particularly 5 to 50 parts by weight) of a dispersant, about 0 to 1,100 parts by weight (particularly 100 to 1,000 parts by weight) of a solvent, such as alcohol, based on 100 parts by weight of conductive carbon particles (the total amount of conductive carbon particles and conductive carbon fibers, when conductive carbon fibers are contained). When conductive carbon particles and conductive carbon fibers are both contained, the ratio of conductive carbon particles to conductive carbon fibers is preferably in the range of about 9:1 (weight ratio) to about 1:9 (weight ratio), and is particularly preferably about 8:2 (weight ratio) to about 2:8 (weight ratio). To enhance water repellency, the composition may contain a fluororesin in an amount of about 5 to 250 parts by weight (preferably 10 to 200 parts by weight). When an elastomer emulsion is used as a polymer, the solids content is preferably within the above-mentioned range. When the first conductive layer-forming paste composition contains a resin component having a high Tg, such as a fluororesin, the ratio of the polymer to the resin having a high Tg content is preferably in the range of about 9:1 (weight ratio) to about 4:6 (weight ratio), and is particularly preferably about 8:2 (weight ratio) to about 5:5 (weight ratio).

The second conductive layer-forming paste composition may comprise, for example, about 5 to 150 parts by weight (particularly 10 to 100 parts by weight) of a polymer, 0 to 100 parts by weight (particularly 5 to 50 parts by weight) of a dispersant, and 0 to 500 parts by weight (particularly about 10 to 400 parts by weight) of a solvent, such as alcohol, based on 100 parts by weight of conductive carbon particles (the total amount of conductive carbon particles and conductive carbon fibers when conductive carbon particles are contained). When conductive carbon particles and conductive carbon fibers are both contained, the ratio of conductive carbon particles to conductive carbon fibers is preferably in the range of about 9:1 (weight ratio) to about 1:9 (weight ratio), and is particularly preferably about 8:2 (weight ratio) to about 2:8 (weight ratio). When an elastomer emulsion is used as a polymer, the solids content is preferably within the above-mentioned range. When the second conductive layer-forming paste composition comprises a resin component having a high Tg, the ratio of the polymer to the resin having a high Tg content is preferably in the range of about 9:1 (weight ratio) to 4:6 (weight ratio), and is particularly preferably about 8:2 (weight ratio) to 5:5 (weight ratio).

The first conductive layer-forming paste composition and the second conductive layer-forming paste composition comprise the aforementioned components.

The substrate is not particularly limited insofar as the paste composition can be applied thereto. Known or commercially available substrates can be used widely. Examples of substrates include polyimide, polyethylene terephthalate, polyparabanic acid, aramid, polyamide (nylon), polysulfone, polyether sulphone, polyphenylene sulfide, polyether ether ketone, polyether imide, polyarylate, polyethylene naphthalate, polypropylene, and like polymeric films. Further, ethylene-tetrafluoroethylene copolymers (ETFE), tetrafluoroethylene-hexafluoropropylene copolymers (FEP), tetrafluoro-fluoro alkyl vinyl ether copolymer (PFA), polytetrafluoroethylene (PTFE), or the like can also be used. Among these, polymeric films that are highly heat-resistant and easily available are preferable. For example, polyethylene terephthalate, polyethylene naphthalate, polytetrafluoroethylene (PTFE), polyimide, and like films are preferable.

The substrate preferably has a release layer formed thereon. For example, the release layer may comprise a known wax. As a substrate having a release layer formed thereon, a film coated with SiOx, a fluororesin, or the like may be used.

It is preferable from the viewpoint of ease of handling and cost efficiency that the thickness of the substrate is typically about 6 to 100 µm, and particularly preferably about 10 to 60 µm.

The coating method is preferably application using known or commercially available doctor blades and like blades; wire bars; squeegees, and like instruments; applicators; die coaters; etc.

The amount of each paste composition to be applied is not particularly limited. The composition for forming a first conductive layer is preferably applied in such an amount that the resulting first conductive layer has a thickness of about 1 to 150 µm, and more preferably about 5 to 100 µm. The composition for forming a second conductive layer is preferably applied in such an amount that the resulting second conductive layer has a thickness of about 30 to 300 µm, and preferably about 50 to 250 µm.

The drying conditions are also not limited. The dry conditions can be suitably changed according to the conditions, such as the volatilization temperature of the solvent used (e.g., alcohol) (for example, about 150°C), and the glass transition temperature of the polymer.

After the first and second conductive layers are obtained by drying, the layers may be further subjected to drying at a higher temperature (e.g., about 150 to 500°C), if necessary.

Further, the first and second conductive layers may be treated on the surface (in particular, on the surface in contact with an other layer. Examples of the surface treatment include mechanical treatment to physically roughen the surface by a metallic brush, sandblasting, or the like, matting treatment, corona discharge treatment, plasma discharge treatment, ultraviolet treatment, etc.

### Characteristics of the fuel cell gas diffusion layer

In the present invention, the fuel cell gas diffusion layer comprises the aforementioned first conductive layer. The front and back sides of the first conductive layer have different densities of the polymer component. When a plurality of polymer are contained in the first conductive layer, at least one type of polymer contained in the first conductive layer (a polymer having a TG that satisfies at least one of the following conditions: the temperature is not higher than the glass transition temperature of the ion-conductive polymer electrolyte contained in the catalyst layer; and the temperature is not higher than the glass transition temperature of the electrolyte membrane-forming ion-conductive resin) is preferably present on the front and back sides of the layer at different densities. In the present invention, the first conductive layer itself may be used as a gas diffusion layer.

In the present invention, in another embodiment, the fuel cell gas diffusion layer preferably comprises a laminate comprising the first conductive layer and a second conductive layer. In this case, the first and second conductive layers are stacked in such a manner that the polymer in the first conductive layer is present with a higher density at the surface of the layer not in contact with the second conductive layer than at the surface in contact with the second conductive layer, and the polymer in the second conductive layer is present with a higher density at the surface of the layer in contact with the first conductive layer than at the surface not in contact with the first conductive layer. Thus, in the present invention, the presence of the polymer in the second conductive layer with a high density at the surface of the layer in contact with the first conductive layer enhances the adhesion between the first and second conductive layers. When a plurality of polymers are contained in the first and second conductive layers, at least one type of polymer contained in the first conductive layer (a polymer having a Tg that satisfies at least one of the following conditions: the temperature is not higher than the glass transition temperature of the ion-conductive polymer electrolyte contained in the catalyst layer, and the temperature is not higher than the glass transition temperature of the electrolyte membrane-forming ion-conductive resin) is preferably present with a higher density at the surface of the layer not in contact with the second conductive layer, and at least one type of polymer contained in the second conductive layer (a polymer having a Tg that satisfies at least one of the following conditions: the temperature is not higher than the glass transition temperature of the ion-conductive polymer electrolyte contained in the catalyst layer, and the temperature is not higher than the glass transition temperature of the electrolyte membrane-forming ion-conductive resin) is preferably present with a higher density at the surface of the layer in contact with the first conductive layer.

The gas diffusion layer comprising a laminate comprising first and second conductive layers can be produced by stacking the first conductive layer and the second conductive layer, and performing hot-pressing. The fuel cell gas diffusion layer produced may be stacked on one or both sides of the catalyst layer laminated membrane described below, and bonded. Alternatively, the first conductive layer and the second conductive layer are stacked in this order on one or both sides of the catalyst layer laminated membrane described below to prepare a fuel cell gas diffusion layer and a membrane-electrode assembly of the present invention. After the gas diffusion layer comprising a laminate comprising the first and second conductive layers is formed in this manner, the resulting gas diffusion layer may be dried at a high temperature (e.g., about 150 to 500°C), as desired.

### Carbon paper, etc.

Further, a known or commercially available conductive porous substrate (e.g., carbon paper, carbon cloth, carbon felt, etc.) may be formed as a gas diffusion layer on the above-described gas diffusion layer. When a portion of the membrane-electrode assembly extends into the channel of a separator, providing such a gas diffusion layer in addition to the above-described gas diffusion layer is particularly effective.

For exemplary purposes with respect to the properties of typical carbon paper, the properties of TGP-H-060 produced by Toray Industries are shown below:
thickness: 190 µm;
electrical resistance: 80 mΩ-cm in the thickness direction, 5.8 mΩ-cm in the surface direction;
porosity: 78%;
bulk density: 0.44 g/cm³;
surface roughness: 8 µm.
The thickness of the carbon paper, etc., is not limited. Preferably, the thickness is typically 50 to 1,000 µm, and preferably about 100 to 400 µm.

Carbon paper, etc. previously subjected to a water-repellent treatment is preferably used. This can further enhance the water repellency of the carbon paper, etc.

The water-repellent treatment may be, for example, a method comprising immersing the carbon paper or the like in an aqueous dispersion of a fluororesin, etc. As the fluororesin, the aforementioned resins, etc., can be used. To disperse a fluororesin in water, a dispersant as mentioned above may be used, and an aqueous suspension containing a fluororesin and an aqueous dispersant is preferably used as the aqueous dispersion.

The amount of the fluororesin in the aqueous dispersion is not particularly limited and may be, for example, about 1 to 30 parts by weight, and particularly preferably about 2 to 20 parts by weight, per 100 parts by weight of water.

### (2) Catalyst layer laminated membrane

### Electrolyte membrane

The electrolyte membrane may be any ion-conductive electrolyte membrane. Whether the membrane to be used is a hydrogen ion-conductive electrolyte membrane or a hydroxide ion-conductive electrolyte membrane, known or commercially available electrolyte membranes can be used. Examples of hydrogen ion-conductive electrolyte membranes include "Nafion" (registered trademark) membrane produced by Du Pont, Inc.; "Flemion" (registered trademark) membrane produced by Asahi Glass Co., Ltd.; "Aciplex" (registered trademark) membrane produced by Asahi Kasei Corporation; "GoreSelect" (registered trademark) membrane produced by Gore & Assoc. Inc.; and the like. Examples of hydroxide ion-conductive electrolyte membranes includes hydrocarbon-based electrolyte membranes such as Aciplex (registered trademark) A-201, A-211, A-221, etc., produced by Asahi Kasei Corporation; Neosepta (registered trademark) AM-1 and AHA produced by Tokuyama Corporation; and the like. Examples of fluororesin-based electrolyte membranes include Tosflex (registered trademark) IE-SF34 produced by Tosoh Corporation; Fumapem (registered trademark) FAA produced by FuMA-Tech GmbH; and the like.

It is preferable that the thickness of the electrolyte membrane is typically about 20 to 250 µm, and more preferably about 20 to 150 µm.

### Catalyst layer

As the catalyst layer, a known or commercially available platinum-containing catalyst layer (a cathode catalyst or an anode catalyst) can be used. Specifically, the catalyst layer is preferably formed of a dried product of the paste composition for forming a Catalyst layer, comprising (1) carbon particles supporting catalyst particles and (2) an ion-conductive polymer electrolyte (preferably a hydrogen ion-conductive polymer electrolyte).

Any catalyst particles that can cause an oxidation-reduction reaction (oxidation of hydrogen at the anode, and reduction of oxygen at the cathode) and that has catalytic activity can be used as the catalyst particles. Examples of catalyst particles include platinum, platinum alloys, platinum compounds, and the like. Examples of platinum alloys include alloys of platinum and at least one metal selected from the group consisting of ruthenium, palladium, nickel, molybdenum, iridium, iron, and cobalt.

Examples of ion-conductive polymer electrolytes include perfluorosulfonic acid-based fluorine ion-exchange resins. Specific examples thereof include perfluorocarbon sulfonic acid-based polymers (PFS polymers) in which a C-H bond of a hydrocarbon-based ion-exchange membrane is replaced with a fluorine.

The thickness of the catalyst layer is not particularly limited. The preferable thickness thereof is typically about 1 to 100 µm, and more preferably about 2 to 50 µm.

In the catalyst layer, fluororesins and non-polymer fluorine materials, such as fluorinated pitch, fluorinated carbon, and graphite fluoride, can be added as a water repellent.

### Method for producing a catalyst layer laminated membrane

The catalyst layer laminated membrane can be produced, for example, by disposing a catalyst layer transfer film in such a manner that the catalyst layer and the electrolyte membrane are face-to-face, pressing the layers under heating to transfer the catalyst layer to the electrolyte membrane, and then detaching the transfer film. A catalyst layer laminated membrane comprising a catalyst layer on both sides of the electrolyte membrane can be produced by repeating this operation twice. In consideration of work efficiency, etc., simultaneously laminating the catalyst layer on both sides of the electrolyte membrane is preferable.

For the transfer, it is preferable to press the layers from the substrate film side of the catalyst layer transfer film using a known pressing machine, etc. To avoid poor transfer, the pressure level is typically about 0.5 to 10 MPa, and preferably about 1 to 8 MPa. To avoid poor transfer, the face to be pressed is preferably heated during the pressing operation. Preferably, the heating temperature is appropriately changed according to the type of electrolyte membrane to be used.

The substrate film is not particularly limited, and the same substrates as mentioned above can be used. Examples of substrate films include polymeric films such as polyimide, polyethylene terephthalate (PET), polysulfone, polyether sulphone, polyphenylene sulfide, polyether ether ketone, polyether imide, polyarylate, polyethylene naphthalate (PEN), polyethylene, polypropylene, and polyolefin. Heat-resistant fluororesins such as ethylene-tetrafluoroethylene copolymer (ETFE), tetrafluoroethylene-hexafluoropropylene copolymer (FEP), tetrafluoroethylene-perfluoroalkyl vinyl ether copolymer (PFA), and polytetrafluoroethylene (PTFE) can also be used. Among these, inexpensive and easily available polymeric films are preferable; and polyethylene terephthalate, etc., are more preferable.

In view of the workability, cost efficiency, etc., of forming the catalyst layer on the substrate film, it is preferable that the thickness of the substrate film is typically about 6 to 150 µm, and particularly about 12 to 75 µm.

The substrate film may have a release layer formed thereon. Examples of release layers include a layer comprising a known wax, a plastic film coated with a known SiOx or a fluororesin, and the like. A substrate film comprising a film with high release properties formed thereon, such as a laminate of a PET substrate and a heat-resistant fluororesin substrate; and like structured substrate films, are also usable.

### (3) Method for producing the fuel cell membrane-electrode assembly

When a fuel cell membrane-electrode assembly comprising a gas diffusion layer comprising a first conductive layer is produced, first, the first conductive layer is produced by the following step:
(AI) A first conductive layer-forming paste composition comprising a polymer having a glass transition temperature that is not higher than the glass transition temperature of the ion-conductive electrolyte contained in the catalyst layer and that is not higher than the glass transition temperature of the electrolyte membrane-forming ion-conductive resin is applied to a substrate, and dried. Then, the first conductive layer is detached from the substrate to produce a first conductive layer having the polymer with a higher density at one side surface than at the opposite side surface.

The membrane-electrode assembly of the present invention is obtained by further performing the following step:
(AII) The first conductive layer is disposed on one or both sides of the catalyst layer laminated membrane in such a manner that the catalyst layer and the surface of the first conductive layer having the polymer with a higher density are face-to-face, and hot-pressing is performed for bonding.

It is preferable that the hot-pressing temperature in the above step (AII) satisfies at least one of the following conditions: the temperature is not higher than the glass transition temperature of the ion-conductive polymer electrolyte contained in the catalyst layer, and the temperature is not higher than the glass transition temperature of the electrolyte membrane-forming ion-conductive resin. It is more preferable that the hot-pressing temperature is not higher than the glass transition temperature of the ion-conductive polymer electrolyte contained in the catalyst layer, and is not higher than the glass transition temperature of the electrolyte membrane-forming ion-conductive resin. Specifically, when Nafion is used as the electrolyte contained in the catalyst layer and as the electrolyte membrane-forming ion-conductive resin, the hot-pressing temperature is preferably about 30 to 130°C, and more preferably about 50 to 120°C. In the case of an electrolyte resin used in a phosphoric acid fuel cell, the hot-pressing temperature is preferably about 130 to 220°C, and more preferably about 140 to 210°C. When the hot-pressing temperature is set within the above-mentioned range, a bonded membrane-electrode assembly can be produced without deterioration of the ion-conductive polymer electrolyte contained in the catalyst layer and the electrolyte membrane-forming resin.

When a fuel cell membrane-electrode assembly comprising a gas diffusion layer comprising first and second conductive layers is produced, for example, the first conductive layer is produced by the following step:
(BI) A first conductive layer-forming paste composition comprising at least a conductive carbon material and a polymer having a glass transition temperature that is not higher than the glass transition temperature of the ion-conductive electrolyte contained in the catalyst layer and/or that is not higher than the glass transition temperature of the electrolyte membrane-forming ion-conductive resin is applied to a substrate, and dried. Then, the first conductive layer is detached from the substrate to produce a first conductive layer having a polymer with a higher density at one side surface than at the opposite side surface.

Then, the second conductive layer is produced by the following step:
(BII): A second conductive layer-forming paste composition comprising at least a conductive carbon material and a polymer having a glass transition temperature that is not higher than the glass transition temperature of the ion-conductive polymer electrolyte contained in the catalyst layer and/or that is not higher than the glass transition temperature of the electrolyte membrane-forming ion-conductive resin is applied to a substrate, and dried. Then, the second conductive layer is detached from the substrate to produce a second conductive layer having a polymer with a higher density at one side surface than at the opposite side surface.

Further, the following step is performed to obtain the membrane-electrode assembly of the present invention:
(BIII) The first conductive layer and the second conductive layer are disposed in this order on one or both sides of the catalyst layer laminated membrane in such a manner that the catalyst layer and the surface of the first conductive layer having a polymer with a higher density are face-to-face and the surface of the second conductive layer having a polymer with a higher density and the surface of the first conductive layer having a polymer with a lower density are face-to-face, and hot-pressing is performed for bonding.

In the above step (BIII), before the second conductive layer is disposed on the first conductive layer, hot-pressing for bonding the first conductive layer and the catalyst layer laminated membrane may be performed.

The hot-pressing temperature in the above step (BIII) preferably satisfies at least one of the following conditions: the temperature is not higher than the glass transition temperature of the ion-conductive polymer electrolyte contained in the catalyst layer, and the temperature is not higher than the glass transition temperature of the electrolyte membrane-forming ion-conductive resin. It is more preferable that the hot-pressing temperature is not higher than the glass transition temperature of the ion-conductive polymer electrolyte contained in the catalyst layer, and is not higher than the glass transition temperature of the electrolyte membrane-forming ion-conductive resin. Specifically, when Nafion is used as the electrolyte contained in the catalyst layer and as the electrolyte membrane-forming ion-conductive resin, the hot-pressing temperature is preferably about 30 to 130°C, and more preferably about 50 to 120°C. In the case of an electrolyte resin used in a phosphoric acid fuel cell, the hot-pressing temperature is preferably about 130 to 220°C, and more preferably about 140 to 210°C. When the hot-pressing temperature is set within the above-mentioned range, a bonded membrane-electrode assembly can be produced without deterioration of the ion-conductive polyelectrolyte contained in the catalyst layer and the electrolyte membrane-forming resin.

### 2. Polymer electrolyte fuel cells

The polymer electrolyte fuel cell comprising the membrane-electrode assembly of the present invention can be produced by providing a known or commercially available separator to the membrane-electrode assembly of the present invention. Advantageous Effects of Invention

According to the present invention, a gas diffusion layer comprising a first conductive layer is bonded to a catalyst layer laminated membrane to thereby provide a membrane-electrode assembly having a strong adhesion between the catalyst layer and the gas diffusion layer. Further, a gas diffusion layer comprising first and second conductive layers is bonded to a catalyst layer laminated membrane to thereby provide a fuel cell membrane-electrode assembly that reduces the position gap between each of the members.

### Description of Embodiments

The present invention is explained in detail with reference to the Examples and Comparative Examples. The present invention is not limited to the following embodiments.

### Materials

The materials shown below were used for preparation of the first conductive layer-forming paste composition and the second conductive layer-forming paste composition, unless otherwise specified.
Conductive carbon particles: Furnace black (Balkan xc72R: produced by Cabot Corporation), average molecular weight: 1000 to 3000
Fluororesin: polytetrafluoroethylene (PTFE) (AD911L: produced by Asahi Glass Co., Ltd.)
Polymer (1): Nafion (a 5 wt% Nafion solution "DE-520" produced by Du Pont, Inc., was used), Tg: 130°C
Polymer (2): AP-2675 (produced by Showa Denko K.K.; emulsion using a styrene acrylic acid-based copolymer resin; solids content 50 wt%), Tg: 0°C
Polymer (3): TLX-1068-1 (produced by Showa Denko K.K.; emulsion using a styrene acrylic acid-based copolymer resin; solids content: 20 wt%), average particle diameter of 15 to 35 nm, Tg: 0°C
Conductive carbon fibers (1): VGCF (VGCF (registered trademark) (standard product): produced by Showa Denko K.K.; average fiber diameter: 150 nm, average fiber length: 10 to 20 µm, and average aspect ratio: 10 to 500)
Conductive carbon fibers (2): DONACARBO-Milled S-2404 (produced by Osaka Gas Chemical, Co., Ltd.; average fiber diameter: 13 µm, average fiber length: 40 µm, and average aspect ratio: 3)
Dispersant: Emulgen A-60 (produced by Kao Corporation)

### Production of Catalyst layer laminated membrane

A catalyst layer laminated membrane was produced by a known method using known materials. The details are shown below.

4 g of platinum catalyst-supporting carbon particles ("TEC10E50E" produced by Tanaka Kikinzoku Kogyo), 40 g of an ion-conductive polyelectrolyte solution (Nafion 5 wt% solution: "DE-520" produced by Du Pont, Inc.), 12 g of distilled water, 20 g of n-butanol, and 20 g of *t*-butanol were added, and mixed under stirring using a disperser, thereby obtaining an anode catalyst layer-forming paste composition and a cathode catalyst layer-forming paste composition.

The anode catalyst layer-forming paste composition and the cathode catalyst layer-forming paste composition were each individually applied to a transfer substrate (material: polyethylene terephthalate film) using an applicator, and dried at 95°C for 30 minutes to form catalyst layers, thereby obtaining an anode catalyst layer-forming transfer sheet and a cathode catalyst layer-forming transfer sheet. The coating amount of the catalyst layer was determined so that each of the anode catalyst layer and the cathode catalyst layer had a platinum-supporting amount of about 0.45 mg/cm².

Using the anode catalyst layer-forming transfer sheet and the cathode catalyst layer-forming transfer sheet produced above, the front and back surface of the electrolyte membrane (Nafion membrane "NR-212" produced by Du Pont, Inc.; film thickness: 50 µm) was hot-pressed at 135°C and 5 MPa for 2 minutes, and then only the transfer substrates were detached. Thus, the catalyst layer laminated membrane was produced.

### Examples 1 to 11 and Comparative Examples 1 to 10

### Example 1

### (i) First Conductive Layer

Conductive carbon particles (100 parts by weight), fluororesin (50 parts by weight), conductive carbon fibers (1) (75 parts by weight), polymer (1) (1250 parts by weight (solids content: 62.5 parts by weight)), dispersant (25 parts by weight), and water (350 parts by weight) were subjected to media dispersion to prepare a first conductive layer-forming paste composition. The first conductive layer-forming paste composition was applied on a polyethylene terephthalate (PET) film, on which a release layer had been formed, to a thickness of about 50 µm using an applicator. Regarding the viscosity of the paste composition, the shear viscosity was about 150 mPa·s at a shear rate of 1000 (1/s). The viscosity of the paste composition was measured using a Physica HCR301 produced by Anton Paar GmbH(a cone-shaped jig with a diameter of 50 mm and an angle of 1° was used as a jig). The paste compositions used in other Examples and Comparative Examples were measured in the same manner. Subsequently, drying was performed in a drying furnace set at 95°C for about 15 minutes to produce a first conductive layer.

### (ii) Membrane-Electrode Assembly

The first conductive layer was detached from the PET film including the release layer, and the surface of the first conductive layer having the polymer (polymer (1)) with a higher density was brought into contact with the cathode catalyst layer side of the catalyst layer-electrolyte laminate. Hot-pressing was then performed at a pressing temperature of 100°C and a pressing pressure of 7.5 kN, for a pressing time of 2 minutes to produce the membrane-electrode assembly of Example 1.

### Example 2

### (i) First Conductive Layer

Conductive carbon particles (100 parts by weight), fluororesin (50 parts by weight), conductive carbon fibers (1) (75 parts by weight), polymer (1) (1250 parts by weight (solids content: 62.5 parts by weight)), polymer (2) (200 parts by weight (solids content: 100 parts by weight)), dispersant (25 parts by weight), and water (350 parts by weight) were subjected to media dispersion to prepare a first conductive layer-forming paste composition. The first conductive layer-forming paste composition was applied on a PET film, on which a release layer had been formed, to a thickness of about 50 µm using an applicator. Regarding the viscosity of the paste composition, the shear viscosity was about 130 mPa·s at a shear rate of 1000 (1/s). Subsequently, drying was performed in a drying furnace set at 95°C for about 15 minutes to produce a first conductive layer.

### (ii) Membrane-Electrode Assembly

The first conductive layer was detached from the PET film including the release layer, and the surface of the first conductive layer having the polymers (polymers (1) and (2)) with a higher density was brought into contact with the cathode catalyst layer side of the catalyst layer-electrolyte laminate. Hot-pressing was then performed at a pressing temperature of 100°C and a pressing pressure of 7.5 kN, for a pressing time of 2 minutes to produce the membrane-electrode assembly of Example 2.

### Example 3

### (i) First Conductive Layer

Conductive carbon particles (100 parts by weight), fluororesin (50 parts by weight), conductive carbon fibers (1) (75 parts by weight), polymer (1) (1250 parts by weight (solids content: 62.5 parts by weight)), polymer (2) (200 parts by weight (solids content: 100 parts by weight)), and water (350 parts by weight) were subjected to media dispersion to prepare a first conductive layer-forming paste composition. The first conductive layer-forming paste composition was applied on a PET film, on which a release layer had been formed, to a thickness of about 50 µm using an applicator. Regarding the viscosity of the paste composition, the shear viscosity was about 130 mPa·s at a shear rate of 1000 (1/s). Subsequently, drying was performed in a drying furnace set at 95°C for about 15 minutes to produce a first conductive layer.

### (ii) Membrane-Electrode Assembly

The first conductive layer was detached from the PET film including the release layer, and the surface of the first conductive layer having the polymers (polymers (1) and (2)) with a higher density was brought into contact with the cathode catalyst layer side of the catalyst layer-electrolyte laminate. Hot-pressing was then performed at a pressing temperature of 100°C and a pressing pressure of 7.5 kN, for a pressing time of 2 minutes to produce the membrane-electrode assembly of Example 3.

### Example 4

### (i) First Conductive Layer

Conductive carbon particles (50 parts by weight), fluororesin (50 parts by weight), and polymer (1) (2000 parts by weight (solids content: 100 parts by weight)) were subjected to media dispersion to prepare a first conductive layer-forming paste composition. The first conductive layer-forming paste composition was applied on a PET film, on which a release layer had been formed, to a thickness of about 50 µm using an applicator. Regarding the viscosity of the paste composition, the shear viscosity was about 250 mPa·s at a shear rate of 1000 (1/s). Subsequently, drying was performed in a drying furnace set at 95°C for about 15 minutes to produce a first conductive layer.

### (ii) Membrane-Electrode Assembly

The first conductive layer was detached from the PET film including the release layer, and the surface of the first conductive layer having the polymer (polymer (1)) with a higher density was brought into contact with the cathode catalyst layer side of the catalyst layer-electrolyte laminate. Hot-pressing was then performed at a pressing temperature of 100°C and a pressing pressure of 7.5 kN, for a pressing time of 2 minutes to produce the membrane-electrode assembly of Example 4.

### Example 5

### (i) First Conductive Layer

Conductive carbon particles (50 parts by weight), fluororesin (50 parts by weight), polymer (1) (2000 parts by weight (solids content: 100 parts by weight)), and dispersant (25 parts by weight) were subjected to media dispersion to prepare a first conductive layer-forming paste composition. The first conductive layer-forming paste composition was applied on a PET film, on which a release layer had been formed, to a thickness of about 50 µm using an applicator. Regarding the viscosity of the paste composition, the shear viscosity was about 250 mPa·s at a shear rate of 1000 (1/s). Subsequently, drying was performed in a drying furnace set at 95°C for about 15 minutes to produce a first conductive layer.

### (ii) Membrane-Electrode Assembly

The first conductive layer was detached from the PET film including the release layer, and the surface of the first conductive layer having the polymer (polymer (1)) with a higher density was brought into contact with the cathode catalyst layer side of the catalyst layer-electrolyte laminate. Hot-pressing was then performed at a pressing temperature of 100°C and a pressing pressure of 7.5 kN, for a pressing time of 2 minutes to produce the membrane-electrode assembly of Example 5.

### Example 6

### (i) First Conductive Layer

Conductive carbon particles (100 parts by weight), fluororesin (50 parts by weight), conductive carbon fibers (1) (75 parts by weight), polymer (1) (1250 parts by weight), dispersant (25 parts by weight), and water (1050 parts by weight) were subjected to media dispersion to prepare a first conductive layer-forming paste composition. The first conductive layer-forming paste composition was applied on a PET film, on which a release layer had been formed, to a thickness of about 50 µm using an applicator. Regarding the viscosity of the paste composition, the shear viscosity was about 60 mPa·s at a shear rate of 1000 (1/s). Subsequently, drying was performed in a drying furnace set at 95°C for about 30 minutes to produce a first conductive layer.

### (ii) Membrane-Electrode Assembly

The first conductive layer was detached from the PET film including the release layer, and the surface of the first conductive layer having the polymer (polymer (1)) with a higher density was disposed in contact with the cathode catalyst layer side of the catalyst layer-electrolyte laminate. Hot-pressing was then performed at a pressing temperature of 100°C and a pressing pressure of 7.5 kN, for a pressing time of 2 minutes to produce the membrane-electrode assembly of Example 6.

### Comparative Example 1

### (i) First Conductive Layer

Conductive carbon particles (100 parts by weight), fluororesin (50 parts by weight), conductive carbon fibers (1) (75 parts by weight), and polymer (1) (1250 parts by weight (solids content: 62.5 parts by weight)), dispersant (25 parts by weight), and water (350 parts by weight) were subjected to media dispersion to prepare a first conductive layer-forming paste composition. The first conductive layer-forming paste composition was applied on a PET film, on which a release layer had been formed, to a thickness of about 50 µm using an applicator. Regarding the viscosity of the paste composition, the shear viscosity was about 150 mPa·s at a shear rate of 1000 (1/s). Subsequently, drying was performed in a drying furnace set at 95°C for about 15 minutes to produce a first conductive layer.

### (ii) Membrane-Electrode Assembly

The first conductive layer was detached from the PET film including the release layer, and the surface of the first conductive layer having the polymer (polymer (1)) with a lower density was brought into contact with the cathode catalyst layer side of the catalyst layer-electrolyte laminate. Hot-pressing was then performed at a pressing temperature of 100°C and a pressing pressure of 7.5 kN, for a pressing time of 2 minutes to produce the membrane-electrode assembly of Comparative Example 1.

### Comparative Example 2

### (i) First Conductive Layer

Conductive carbon particles (100 parts by weight), fluororesin (50 parts by weight), conductive carbon fibers (1) (75 parts by weight), polymer (1) (1250 parts by weight (solids content: 62.5 parts by weight)), polymer (2) (200 parts by weight (solids content: 100 parts by weight)), dispersant (25 parts by weight), and water (350 parts by weight) were subjected to media dispersion to prepare a first conductive layer-forming paste composition. The first conductive layer-forming paste composition was applied on a PET film, on which a release layer had been formed, to a thickness of about 50 µm using an applicator. Regarding the viscosity of the paste composition, the shear viscosity was about 130 mPa·s at a shear rate of 1000 (1/s). Subsequently, drying was performed in a drying furnace set at 95°C for about 15 minutes to produce a first conductive layer.

### (ii) Membrane-Electrode Assembly

The first conductive layer was detached from the PET film including the release layer, and the surface of the first conductive layer having the polymers (polymers (1) and (2)) with a lower density was brought into contact with the cathode catalyst layer side of the catalyst layer-electrolyte laminate. Hot-pressing was then performed at a pressing temperature of 100°C and a pressing pressure of 7.5 kN, for a pressing time of 2 minutes to produce the membrane-electrode assembly of Comparative Example 2.

### Comparative Example 3

### (i) First Conductive Layer

Conductive carbon particles (100 parts by weight), fluororesin (50 parts by weight), conductive carbon fibers (1) (75 parts by weight), polymer (1) (1250 parts by weight (solids content: 62.5 parts by weight)), polymer (2) (200 parts by weight (solids content: 100 parts by weight)), and water (350 parts by weight) were subjected to media dispersion to prepare a first conductive layer-forming paste composition. The first conductive layer-forming paste composition was applied on a PET film, on which a release layer had been formed, to a thickness of about 50 µm using an applicator. Regarding the viscosity of the paste composition, the shear viscosity was about 130 mPa·s at a shear rate of 1000 (1/s). Subsequently, drying was performed in a drying furnace set at 95°C for about 15 minutes to produce a first conductive layer.

### (ii) Membrane-Electrode Assembly

The first conductive layer was detached from the PET film including the release layer, and the surface of the first conductive layer having the polymers (polymers (1) and (2)) with a lower density was brought into contact with the cathode catalyst layer side of the catalyst layer-electrolyte laminate. Hot-pressing was then performed at a pressing temperature of 100°C and a pressing pressure of 7.5 kN, for a pressing time of 2 minutes to produce the membrane-electrode assembly of Comparative Example 3.

### Comparative Example 4

### (i) First Conductive Layer

Conductive carbon particles (50 parts by weight), fluororesin (50 parts by weight), and polymer (1) (2000 parts by weight (solids content: 100 parts by weight)) were subjected to media dispersion to prepare a first conductive layer-forming paste composition. The first conductive layer-forming paste composition was applied on a PET film, on which a release layer had been formed, to a thickness of about 50 µm using an applicator. Regarding the viscosity of the paste composition, the shear viscosity was about 250 mPa·s at a shear rate of 1000 (1/s). Subsequently, drying was performed in a drying furnace set at 95°C for about 15 minutes to produce a first conductive layer.

### (ii) Membrane-Electrode Assembly

The first conductive layer was detached from the PET film including the release layer, and the surface of the first conductive layer having the polymer (polymer (1)) with a lower density was brought into contact with the cathode catalyst layer side of the catalyst layer-electrolyte laminate. Hot-pressing was then performed at a pressing temperature of 100°C and a pressing pressure of 7.5 kN, for a pressing time of 2 minutes to produce the membrane-electrode assembly of Comparative Example 4.

### Comparative Example 5

### (i) First Conductive Layer

Conductive carbon particles (50 parts by weight), fluororesin (50 parts by weight), polymer (1) (2000 parts by weight (solids content: 100 parts by weight)), and dispersant (25 parts by weight) were subjected to media dispersion to prepare a first conductive layer-forming paste composition. The first conductive layer-forming paste composition was applied on a PET film, on which a release layer had been formed, to a thickness of about 50 µm using an applicator. Subsequently, drying was performed in a drying furnace set at 95°C for about 15 minutes to produce a first conductive layer.

### (ii) Membrane-Electrode Assembly

The first conductive layer was detached from the PET film including the release layer, and the surface of the first conductive layer having the polymer (polymer (1)) with a lower density was brought into contact with the cathode catalyst layer side of the catalyst layer-electrolyte laminate. Hot-pressing was then performed at a pressing temperature of 100°C and a pressing pressure of 7.5 kN, for a pressing time of 2 minutes to produce the membrane-electrode assembly of Comparative Example 5.

### Comparative Example 6

Conductive carbon particles (100 parts by weight), PTFE (250 parts by weight) (Leblond LDW-41 produced by Daikin Co., Ltd.: 175 parts by weight; and PTFE31-JR produced by Du Pont, Inc.: 75 parts by weight), conductive carbon fibers (1) (25 parts by weight), dispersant (25 parts by weight), and water (850 parts by weight) were subjected to media dispersion to prepare a first conductive layer-forming paste composition (20 wt% of the conductive carbon fibers based on the total amount of the conductive carbon particles and the conductive carbon fibers).

By adjusting the coating amount of the water-repellent layer to about 35 g/m² and the coating thickness to about 35 µm, water-repellent treatment was performed on a conductive porous substrate. A carbon paper used as the conductive porous substrate was immersed for 2 minutes in a PTFE aqueous dispersion obtained by adding 5 parts by weight of a PTFE suspension (100 parts by weight of a PTFE suspension comprising 60 parts by weight of PTFE, 2 parts by weight of a dispersant (polyoxyethylene alkylene alkyl ether), and 38 parts by weight of water) to 100 parts by weight of water. Subsequently, the carbon paper was dried in an air atmosphere at 95°C for about 15 minutes, and calcined in an air atmosphere at about 300°C for about 2 hours, thus performing water-repellent treatment.

The first conductive layer-forming paste composition prepared above was uniformly applied using an applicator ("Micrometer Adjustable Film Applicator, 1117/200" produced by Sheen Instruments Ltd.) on one side of the water repellent-treated conductive porous substrate to an application amount of about 35 g/m² calculated on a solids basis. Subsequently, after drying was performed at 95°C in an air atmosphere for about 20 minutes, calcination was conducted in an air atmosphere at 300°C for 2 hours to form a gas diffusion layer in which a first conductive layer was formed on the surface of the water repellent-treated conductive porous substrate. The first conductive layer side of the water repellent-treated conductive porous substrate on which the first conductive layer had been applied was brought into contact with the catalyst layer, and hot-pressed at a pressing temperature of 100°C, a pressing pressure of 7.5 kN, and a pressing time of 2 minutes, thereby producing the membrane-electrode assembly of Comparative Example 6.

### Example 7

### (i) First Conductive Layer

Conductive carbon particles (100 parts by weight), fluororesin (50 parts by weight), conductive carbon fibers (1) (75 parts by weight), polymer (1) (1250 parts by weight (solids content: 62.5 parts by weight)), dispersant (25 parts by weight), and water (350 parts by weight) were subjected to media dispersion to prepare a first conductive layer-forming paste composition. The first conductive layer-forming paste composition was applied on a polyethylene terephthalate (PET) film, on which a release layer had been formed, to a thickness of about 50 µm using an applicator. Regarding the viscosity of the paste composition, the shear viscosity was about 150 mPa·s at a shear rate of 1000 (1/s). The viscosity of the paste composition was measured using a Physica MCR301 produced by Anton Paar GmbH (a cone-shaped jig with a diameter of 50 mm and an angle of 1° was used as a jig). The paste compositions used in other Examples and Comparative Examples were measured in the same manner. Subsequently, drying was performed in a drying furnace set at 95°C for about 15 minutes to produce a first conductive layer.

### (ii) Second Conductive Layer

Conductive carbon fibers (2) (100 parts by weight), polymer (2) (50 parts by weight (solids content: 25 parts by weight)), dispersant (25 parts by weight), polymer (1) (60 parts by weight (solids content: 3 parts by weight)), and water (100 parts by weight) were subjected to media dispersion to prepare a second conductive layer-forming paste composition. The second conductive layer-forming paste composition was applied on a PET film, on which a release layer had been formed, to a thickness of about 150 µm using an applicator. Regarding the viscosity of the paste composition, the shear viscosity was about 70 mPa·s at a shear rate of 1000 (1/s). Subsequently, drying was performed in a drying furnace set at 95°C for about 40 minutes to produce a second conductive layer.

### (iii) Membrane-Electrode Assembly

The first conductive layer and the second conductive layer were each individually detached from the PET substrate including the release layer, and the surface of the first conductive layer having the polymer (polymer (1)) with a higher density was brought into contact with the cathode catalyst layer side of the catalyst layer-electrolyte laminate; and the surface of the second conductive layer having the polymers (polymers (1) and (2)) with a higher density was disposed adjacent to the first conductive layer. Hot-pressing was then performed at a pressing temperature of 100°C and a pressing pressure of 7.5 kN, for a pressing time of 2 minutes to produce the membrane-electrode assembly of Example 7.

### Example 8

### (i) First Conductive Layer

Conductive carbon particles (50 parts by weight), conductive carbon fibers (1) (50 parts by weight), polymer (1) (2000 parts by weight (solids content: 100 parts by weight)), and dispersant (25 parts by weight) were subjected to media dispersion to prepare a first conductive layer-forming paste composition. The first conductive layer-forming paste composition was applied on a PET film, on which a release layer had been formed, to a thickness of about 50 µm using an applicator. Regarding the viscosity of the paste composition, the shear viscosity was about 285 mPa·s at a shear rate of 1000 (1/s). Subsequently, drying was performed in a drying furnace set at 95°C for about 15 minutes to produce a first conductive layer.

### (ii) Second Conductive Layer

Conductive carbon fibers (2) (100 parts by weight), polymer (2) (50 parts by weight (solids content: 25 parts by weight)), dispersant (25 parts by weight), polymer (1) (60 parts by weight (solids content: 3 parts by weight)), and water (100 parts by weight) were subjected to media dispersion to prepare a second conductive layer-forming paste composition. The second conductive layer-forming paste composition was applied on a PET film, on which a release layer had been formed, to a thickness of about 150 µm using an applicator. Regarding the viscosity of the paste composition, the shear viscosity was about 70 mPa·s at a shear rate of 1000 (1/s). Subsequently, drying was performed in a drying furnace set at 95°C for about 40 minutes to produce a second conductive layer.

### (iii) Membrane-Electrode Assembly

The first conductive layer and the second conductive layer were each individually detached from the PET substrate including the release layer, and the surface of the first conductive layer having the polymer (polymer (1)) with a higher density was brought into contact with the cathode catalyst layer side of the catalyst layer-electrolyte laminate; and the surface of the second conductive layer having the polymers (polymers (1) and (2)) with a higher density was disposed adjacent to the first conductive layer. Hot-pressing was then performed at a pressing temperature of 100°C and a pressing pressure of 7.5 kN, for a pressing time of 2 minutes to produce the membrane-electrode assembly of Example 8.

### Example 9

### (i) First Conductive Layer

Conductive carbon particles (100 parts by weight), conductive carbon fibers (1) (100 parts by weight), polymer (3) (1600 parts by weight (solids content: 320 parts by weight)), polymer (1) (1600 parts by weight (solids content: 80 parts by weight)) and ethanol (250 parts by weight) were subjected to media dispersion to prepare a first conductive layer-forming paste composition. The first conductive layer-forming paste composition was applied on a PET film, on which a release layer had been formed, to a thickness of about 50 µm using an applicator. Regarding the viscosity of the paste composition, the shear viscosity was about 170 mPa·s at a shear rate of 1000 (1/s). Subsequently, drying was performed in a drying furnace set at 95°C for about 15 minutes to produce a first conductive layer.

### (ii) Second Conductive Layer

Conductive carbon fibers (2) (100 parts by weight), polymer (2) (50 parts by weight (solids content: 25 parts by weight)), dispersant (25 parts by weight), polymer (1) (60 parts by weight (solids content: 3 parts by weight)), and water (100 parts by weight) were subjected to media dispersion to prepare a second conductive layer-forming paste composition. The second conductive layer-forming paste composition was applied on a PET film, on which a release layer had been formed, to a thickness of about 150 µm using an applicator. Regarding the viscosity of the paste composition, the shear viscosity was about 70 mPa·s at a shear rate of 1000 (1/s). Subsequently, drying was performed in a drying furnace set at 95°C for about 40 minutes to produce a second conductive layer.

### (iii) Membrane-Electrode Assembly

The first conductive layer and the second conductive layer were each individually detached from the PET substrate including the release layer, and the surface of the first conductive layer having the polymers (polymers (1) and (3)) with a higher density was brought into contact with the cathode catalyst layer side of the catalyst layer-electrolyte laminate; and the surface of the second conductive layer having the polymers (polymers (1) and (2)) with a higher density was disposed adjacent to the first conductive layer. Hot-pressing was then performed at a pressing temperature of 100°C and a pressing pressure of 7.5 kN, for a pressing time of 2 minutes to produce the membrane-electrode assembly of Example 9.

### Example 10

### (i) First Conductive Layer

Conductive carbon particles (100 parts by weight), fluororesin (50 parts by weight), conductive carbon fibers (1) (75 parts by weight), polymer (3) (1400 parts by weight), polymer (1) (1250 parts by weight), dispersant (25 parts by weight), and water (350 parts by weight) were subjected to media dispersion to prepare a first conductive layer-forming paste composition. The first conductive layer-forming paste composition was applied on a PET film, on which a release layer had been formed, to a thickness of about 50 µm using an applicator. Regarding the viscosity of the paste composition, the shear viscosity was about 170 mPa·s at a shear rate of 1000 (1/s). Subsequently, drying was performed in a drying furnace set at 95°C for about 15 minutes to produce a first conductive layer.

### (ii) Second Conductive Layer

Conductive carbon fibers (2) (100 parts by weight), polymer (2) (50 parts by weight (solids content: 25 parts by weight)), dispersant (25 parts by weight), polymer (1) (60 parts by weight (solids content: 3 parts by weight)), and water (100 parts by weight) were subjected to media dispersion to prepare a second conductive layer-forming paste composition. The second conductive layer-forming paste composition was applied on a PET film, on which a release layer had been formed, to a thickness of about 150 µm using an applicator. Regarding the viscosity of the paste composition, the shear viscosity was about 70 mPa·s at a shear rate of 1000 (1/s). Subsequently, drying was performed in a drying furnace set at 95°C for about 40 minutes to produce a second conductive layer.

### (iii) Membrane-Electrode Assembly

The first conductive layer and the second conductive layer were each individually detached from the PET substrate including the release layer, and the surface of the first conductive layer having the polymers (polymers (1) and (3)) with a higher density was brought into contact with the cathode catalyst layer side of the catalyst layer-electrolyte laminate; and the surface of the second conductive layer having the polymers (polymers (1) and (2)) with a higher density was disposed adjacent to the first conductive layer. Hot-pressing was then performed at a pressing temperature of 100°C and a pressing pressure of 7.5 kN, for a pressing time of 2 minutes to produce the membrane-electrode assembly of Example 10.

### Example 11

### (i) First Conductive Layer

Conductive carbon particles (100 parts by weight), fluororesin (50 parts by weight), conductive carbon fibers (1) (75 parts by weight), polymer (1) (1250 parts by weight), dispersant (25 parts by weight), and water (1050 parts by weight) were subjected to media dispersion to prepare a first conductive layer-forming paste composition. The first conductive layer-forming paste composition was applied on a polyethylene terephthalate (PET) film, on which a release layer had been formed, to a thickness of about 50 µm using an applicator. Regarding the viscosity of the paste composition, the shear viscosity was about 60 mPa·s at a shear rate of 1000 (1/s). Subsequently, drying was performed in a drying furnace set at 95°C for about 30 minutes to produce a first conductive layer.

### (ii) Second Conductive Layer

Conductive carbon fibers (2) (100 parts by weight), polymer (2) (50 parts by weight (solids content: 25 parts by weight)), dispersant (25 parts by weight), polymer (1) (60 parts by weight (solids content: 3 parts by weight)), and water (100 parts by weight) were subjected to media dispersion to prepare a second conductive layer-forming paste composition. The second conductive layer-forming paste composition was applied on a PET film, on which a release layer had been formed, to a thickness of about 150 µm using an applicator. Regarding the viscosity of the paste composition, the shear viscosity was about 70 mPa·s at a shear rate of 1000 (1/s). Subsequently, drying was performed in a drying furnace set at 95°C for about 30 minutes to produce a second conductive layer.

### (iii) Membrane-Electrode Assembly

The first conductive layer and the second conductive layer were each individually detached from the PET substrate including the release layer, and the surface of the first conductive layer having the polymer (polymer (1)) with a higher density was brought into contact with the cathode catalyst layer side of the catalyst layer-electrolyte laminate; and the surface of the second conductive layer having the polymers (polymers (1) and (2)) with a higher density was disposed adjacent to the first conductive layer. Hot-pressing was then performed at a pressing temperature of 100°C and a pressing pressure of 7.5 kN, for a pressing time of 2 minutes to produce the membrane-electrode assembly of Example 11.

### Comparative Example 7

Using the same material compositions of Example 7, the first conductive layer-forming paste composition and the second conductive layer-forming paste composition were prepared. The first conductive layer-forming paste composition and the second layer-forming paste composition were each individually applied on a PET film, on which a release layer had been formed, to a thickness of about 50 µm (the first conductive layer) and a thickness of about 150 µm (the second conductive layer) using an applicator. The first conductive layer and the second conductive layer were each individually detached from the PET substrate including the release layer, and the surface of the first conductive layer having the polymer (polymer (1)) with a higher density was brought into contact with the cathode catalyst layer side of the catalyst layer-electrolyte laminate; and the surface of the second conductive layer having the polymers (polymers (1) and (2)) with a lower density was disposed adjacent to the first conductive layer. Hot-pressing was then performed at a pressing temperature of 100°C and a pressing pressure of 7.5 kN, for a pressing time of 2 minutes to produce the membrane-electrode assembly of Comparative Example 7.

### Comparative Example 8

Using the same material compositions of Example 8, the first conductive layer-forming paste composition and the second conductive layer-forming paste composition were prepared. The first conductive layer-forming paste composition and the second layer-forming paste composition were each individually applied on a PET film, on which a release layer had been formed, to a thickness of about 50 µm (the first conductive layer) and a thickness of about 150 µm (the second conductive layer) using an applicator. The first conductive layer and the second conductive layer were each individually detached from the PET substrate including the release layer, and the surface of the first conductive layer having the polymer (polymer (1)) with a higher density was brought into contact with the cathode catalyst layer side of the catalyst layer-electrolyte laminate; and the surface of the second conductive layer having the polymers (polymer (1) and (2)) with a lower density was disposed adjacent to the first conductive layer. Hot-pressing was then performed at a pressing temperature of 100°C and a pressing pressure of 7.5 kN, for a pressing time of 2 minutes to produce the membrane-electrode assembly of Comparative Example 8.

### Comparative Example 9

Using the same material compositions of Example 9, the first conductive layer-forming paste composition and the second conductive layer-forming paste composition were prepared. The first conductive layer-forming paste composition and the second layer-forming paste composition were each individually applied on a PET film, on which a release layer had been formed, to a thickness of about 50 µm (the first conductive layer) and a thickness of about 150 µm (the second conductive layer) using an applicator. The first conductive layer and the second conductive layer were each individually detached from the PET substrate including the release layer, and the surface of the first conductive layer having the polymers (polymers (1) and (3)) with a higher density was brought into contact with the cathode catalyst layer side of the catalyst layer-electrolyte laminate; and the surface of the second conductive layer having the polymers (polymer (1) and (2)) with a lower density was disposed adjacent to the first conductive layer. Hot-pressing was then performed at a pressing temperature of 100°C and a pressing pressure of 7.5 kN, for a pressing time of 2 minutes to produce the membrane-electrode assembly of Comparative Example 9.

### Comparative Example 10

Using the same material compositions of Example 10, the first conductive layer-forming paste composition and the second conductive layer-forming paste composition were prepared. The first conductive layer-forming paste composition and the second layer-forming paste composition were each individually applied on a PET film, on which a release layer had been formed, to a thickness of about 50 µm (the first conductive layer) and a thickness of about 150 µm (the second conductive layer) using an applicator. The first conductive layer and the second conductive layer were each individually detached from the PET substrate including the release layer, and the surface of the first conductive layer having the polymers (polymers (1) and (3)) with a higher density was brought into contact with the cathode catalyst layer side of the catalyst layer-electrolyte laminate; and the surface of the second conductive layer having the polymers (polymers (1) and (2)) with a lower density was disposed adjacent to the first conductive layer. Hot-pressing was then performed at a pressing temperature of 100°C and a pressing pressure of 7.5 kN, for a pressing time of 2 minutes to produce the membrane-electrode assembly of Comparative Example 10.

### First Conductive Layer Evaluation Test

As typical examples, Table 1 shows the results of the front and back surfaces of the first conductive layers of Examples 1, 6, 7, and 11, which were observed by energy dispersion X-ray fluorescence analysis. The results confirmed that the proportion of each of the F and S elements contained in Nafion resin and PTFE resin was different between the front surface and the back surface of the first conductive layer; and both of the PTFE resin and Nafion resin segregated between the front surface and the back surface of the first conductive layer. Compared to the results of Examples 1 and 7, the results of Examples 6 and 11 showed a significant difference. Accordingly, it was confirmed that resin was more likely to segregate when the first conductive layer-forming paste composition had a low viscosity. Similar results were obtained in Examples 2 to 5 and 8 to 10. In Table 1, "PET film contact surface" means a surface that is in contact with the PET film before the PET film is detached from the first conductive layer, and "PET film noncontact surface" is a surface opposite to the PET film contact surface.

**Table 1**

| Evaluation element | Examples 1 and 7 | | Examples 6 and 11 | |
|---|---|---|---|---|
| | PET film noncontact surface | PET film contact surface | PET film noncontact surface | PET film contact surface |
| C | 61.32 | 58.85 | 62.53 | 57.72 |
| N | 18.81 | 16.36 | 18.89 | 15.98 |
| O | 2.8 | 3.23 | 2.52 | 3.41 |
| F | 16.68 | 20.85 | 15.71 | 21.97 |
| S | 0.39 | 0.71 | 0.35 | 0.92 |

### Membrane-Electrode Assembly Evaluation Test (1)

Using a medium-temperature press device (produced by Tester Sangyo, Co., Ltd.), adhesion between the first conductive layer and the catalyst layer in each of the membrane-electrode assemblies of Examples 1 to 6 and Comparative Examples 1 to 6 was measured.

Adhesion was subjectively evaluated as to whether the layers were adhered together in a manner such that one layer was not detached from another layer. Specifically, adhesion was rated A or B.
A: Strongly adhered and difficult to detach layers with hands.
B: Easy to detach layers with hands, or no adhesion was observed.
Table 2 shows the results.

**Table 2**

| | Adhesion between the first conductive layer and the catalyst layer |
|---|---|
| Example 1 | A |
| Example 2 | A |
| Example 3 | A |
| Example 4 | A |
| Example 5 | A |
| Example 6 | A |
| Comp. Exam. 1 | B |
| Comp. Exam. 2 | B |
| Comp. Exam. 3 | B |
| Comp. Exam. 4 | B |
| Comp. Exam. 5 | B |
| Comp. Exam. 6 | B |

To attain high adhesion between the first conductive layer and the catalyst layer, Examples 1 to 6 confirmed that layering the surface of the first conductive layer having the polymer(s) with a higher density adjacent to the catalyst layer was necessary.

The results confirmed that layering the surface of the first conductive layer having the polymer(s) with a higher density adjacent to the catalyst layer ensures production of a bonded membrane-electrode assembly, and reduces the entire electrode thickness.

### Membrane-Electrode Assembly Evaluation Test (2)

Using a medium-temperature press device (produced by Tester Sangyo, Co., Ltd.), adhesion between the catalyst layer and the first conductive layer, and adhesion between the first conductive layer and the second conductive layer in each of the membrane-electrode assemblies of Examples 7 to 11 and Comparative Examples 7 to 10 were measured.

Adhesion was subjectively evaluated as to whether the layers were adhered in a manner such that one layer was not detached from another layer. Specifically, adhesion was rated A or B.
A: Strongly adhered and difficult to detach layers with hands.
B: Easy to detach layers with hands, or no adhesion was observed.
Table 3 shows the results.

**Table 3**

| | Adhesion | |
|---|---|---|
| | Between the first conductive layer and the catalyst layer | Between the first conductive layer and the second conductive layer |
| Example 7 | A | A |
| Example 8 | A | A |
| Example 9 | A | A |
| Example 10 | A | A |
| Example 11 | A | A |
| Comp. Exam. 7 | A | B |
| Comp. Exam. 8 | A | B |
| Comp. Exam. 9 | A | B |
| Comp. Exam. 10 | A | B |

To attain high adhesion between the catalyst layer and the first conductive layer, and high adhesion between the first conductive layer and the second conductive layer, Examples 7 to 11 confirmed that determining the surface having the polymer(s) with a higher density as a surface in contact with the catalyst layer, and the surface having the polymer(s) with a higher density as a surface in contact with the first conductive layer side of the second conductive layer was necessary.

The results indicate that by disposing the surface of the first conductive layer having the polymer(s) with a higher density on the catalyst layer side, and the surface of the second conductive layer having the polymer(s) with a higher density on the first conductive layer side, a bonded membrane-electrode assembly was produced by hot-pressing at a low temperature that had little affect on the electrolyte resin.

## Claims

1. A fuel cell membrane-electrode assembly comprising a catalyst layer laminated membrane and at least one fuel cell gas diffusion layer,
the catalyst layer laminated membrane comprising a catalyst layer, an electrolyte membrane, and a catalyst layer that are sequentially laminated,
the fuel cell gas diffusion layer being disposed on one side or both sides of the catalyst layer laminated membrane,
the fuel cell gas diffusion layer comprising a first conductive layer and being stacked on the catalyst layer laminated membrane in such a manner that the first conductive layer is in contact with the catalyst layer,
the first conductive layer comprising at least a conductive carbon material and a polymer, the polymer having a glass transition temperature that satisfies at least one of the following conditions: the temperature is not higher than the glass transition temperature of an ion-conductive polymer electrolyte that is contained in the catalyst layer, and the temperature is not higher than the glass transition temperature of an electrolyte membrane-forming ion-conductive resin, and
the polymer in the first conductive layer being present with a higher density at the surface of the layer in contact with the catalyst layer than at the surface not in contact with the catalyst layer.

2. The fuel cell membrane-electrode assembly according to claim 1, wherein the glass transition temperature of the polymer in the first conductive layer is not higher than the glass transition temperature of the ion-conductive polymer electrolyte contained in the catalyst layer and is not higher than the glass transition temperature of the electrolyte membrane-forming ion-conductive resin.

3. The fuel cell membrane-electrode assembly according to claim 1 or 2, wherein the conductive carbon material in the first conductive layer comprises conductive carbon particles.

4. The fuel cell membrane-electrode assembly according to any one of claims 1 to 3, wherein the fuel cell gas diffusion layer further comprises a second conductive layer formed on the first conductive layer,
the second conductive layer comprising at least a conductive carbon material and a polymer, the polymer having a glass transition temperature that satisfies at least one of the following conditions: the temperature is not higher than the glass transition temperature of the ion-conductive electrolyte contained in the catalyst layer, and the temperature is not higher than the glass transition temperature of the electrolyte membrane-forming ion-conductive resin,
the polymer in the first conductive layer being present with a higher density at the surface of the layer in contact with the catalyst layer than at the surface not in contact with the catalyst layer, and
the polymer in the second conductive layer being present with a higher density at the surface of the layer in contact with the first conductive layer than at the surface not in contact with the first conductive layer.

5. The fuel cell membrane-electrode assembly according to claim 4, wherein the glass transition temperature of the polymer in the second conductive layer is not higher than the glass transition temperature of the ion-conductive electrolyte contained in the catalyst layer, and is not higher than the glass transition temperature of the electrolyte membrane-forming ion-conductive resin.

6. The fuel cell membrane-electrode assembly according to claim 4 or 5, wherein the conductive carbon material in the second conductive layer comprises conductive carbon fibers.

7. The fuel cell membrane-electrode assembly according to any one of claims 1 to 6, further comprising a conductive porous substrate stacked on the first or second conductive layer, the conductive porous substrate comprising carbon paper, carbon cloth, or carbon nonwoven fabric.

8. The fuel cell membrane-electrode assembly according to claim 7, wherein the conductive porous substrate has water repellency imparted by a fluororesin.

9. A method for producing the fuel cell membrane-electrode assembly according to any one of claims 1 to 8, the method comprising the steps of:
(AI) applying a first conductive layer-forming paste composition to a substrate and drying, wherein the composition comprises at least a conductive carbon material and a polymer, the polymer having a glass transition temperature that satisfies at least one of the following conditions: the temperature is not higher than the glass transition temperature of the ion-conductive electrolyte contained in the catalyst layer, and the temperature is not higher than the glass transition temperature of the electrolyte membrane-forming ion-conductive resin, and then detaching the first conductive layer from the substrate to produce a first conductive layer having a polymer with a higher density at one side surface than at the opposite side surface; and
(AII) disposing the first conductive layer on one side or both sides of the catalyst layer laminated membrane in such a manner that the catalyst layer and the surface of the first conductive layer having the polymer with a higher density are face-to-face, and performing hot-pressing for bonding.

10. A method for producing the fuel cell membrane-electrode assembly according to any one of claims 4 to 6, the method comprising the steps of:
(BI) applying a first conductive layer-forming paste composition to a substrate and drying, wherein the composition comprises at least a conductive carbon material and a polymer, the polymer having a glass transition temperature that satisfies at least one of the following conditions: the temperature is not higher than the glass transition temperature of the ion-conductive electrolyte contained in the catalyst layer, and the temperature is not higher than the glass transition temperature of the electrolyte membrane-forming ion-conductive resin, and then detaching the first conductive layer from the substrate to produce a first conductive layer having a polymer with a higher density at one side surface than at the opposite side surface, and
(BII) applying a second conductive layer-forming paste composition to a substrate and drying, wherein the composition comprises at least a conductive carbon material and a polymer, the polymer having a glass transition temperature that satisfies at least one of the following conditions: the temperature is not higher than the glass transition temperature of the ion-conductive electrolyte contained in the catalyst layer, and the temperature is not higher than the glass transition temperature of the electrolyte membrane-forming ion-conductive resin, and then detaching the second conductive layer from the substrate to produce a second conductive layer having a polymer with a higher density at one side surface than at the opposite side surface, and
(BIII) disposing the first and second conductive layers on one side or both sides of the catalyst layer laminated membrane in such a manner that the catalyst layer and the surface of the first conductive layer having the polymer with a higher density are face-to-face, and the surface of the second conductive layer having the polymer with a higher density and the surface of the first conductive layer having the polymer with a lower density are face-to-face, and performing hot-pressing for bonding.

11. The method according to claim 10 wherein in step (BIII), the first conductive layer and the catalyst layer laminated membrane are hot-pressed before disposing the second conductive layer on the first conductive layer.

12. The method according to any one of claims 9 to 11 wherein in step (AII) or (BIII), the hot-pressing temperature satisfies at least one of the following conditions: the temperature is not higher than the glass transition temperature of the ion-conductive polymer electrolyte contained in the catalyst layer, and the temperature is not higher than the glass transition temperature of the electrolyte membrane-forming ion-conductive resin.

13. The method according to any one of claims 9 to 12 wherein in step (AII) or (BIII), the hot-pressing temperature is not higher than the glass transition temperature of the ion-conductive polymer electrolyte contained in the catalyst layer, and is not higher than the glass transition temperature of the electrolyte membrane-forming ion-conductive resin.

14. A polymer electrolyte fuel cell comprising the fuel cell membrane-electrode assembly according to any one of claims 1 to 8.
